(19) Europäisches Patentamt
European Patent Office
Office européen des brevets

(11) **EP 4 717 453 A1**

(12) **EUROPEAN PATENT APPLICATION**

(43) Date of publication:
**01.04.2026 Bulletin 2026/14**

(21) Application number: **24203554.1**

(22) Date of filing: **30.09.2024**

(51) International Patent Classification (IPC):
**B32B 27/08** (2006.01)    **B32B 27/32** (2006.01)
**B32B 7/06** (2019.01)    **B32B 27/20** (2006.01)
**B65D 77/20** (2006.01)

(52) Cooperative Patent Classification (CPC):
**B32B 27/32; B32B 27/08;** B32B 7/06; B32B 27/20;
B32B 2307/31; B32B 2435/02; B65D 77/2032

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **adapa flexibles Denmark Slagelse A/S
4200 Slagelse (DK)**

(72) Inventors:
• **JOHANSEN, Peter**
  **4200 Slagelse (DK)**
• **MIDTIBY, Steen**
  **4200 Slagelse (DK)**
• **FOGTMANN, Torben**
  **5800 Nyborg (DK)**

(74) Representative: **AWA Denmark A/S
Strandgade 56
1401 Copenhagen K (DK)**

(54) **HEAT-SEALABLE LID FILMS**

(57)    The present invention relates to heat-sealable lid films for being adapted into or applied as a heat-sealable lid for a container. The invention also relates to heat-sealable lids for containers, to packages, to methods of manufacturing heat-sealable lid films and methods of manufacturing heat-sealable lids for containers.

Fig. 3

**Description**

**Field of Invention**

The present invention relates to heat-sealable lid films for being adapted into or applied as a heat-sealable lid for a container. The invention also relates to heat-sealable lids for containers, to packages, to methods of manufacturing heat-sealable lid films and methods of manufacturing heat-sealable lids for containers.

**Background of the Invention**

Die cut lids which are sealed to containers or cups are used to pack a lot of different products like yogurt, mayonnaise, salads and crème cheese. Currently the containers or cups are typically based on either polypropylene (PP) or polyethylene terephthalate (PET). Such containers or cups comprise an open top, which is closed and sealed using a heat-sealable lid film, also known as a sheet lid. The containers are closed off and sealed with the sheet lid after dosing of the foodstuff product into the container, which produces a package comprising the container, the foodstuff product in the container, and the sealing lid.

Some sheet lids for containers comprise aluminium. Aluminium is favourable because it provides good properties including good barrier properties, which helps to protect the contents of the package. However, lids containing aluminium result in a high carbon footprint of the resulting package.

Alternatively, other sheet lids for containers use mixed plastics such as polyethylene terephthalate film coextrusion coated with different layers mainly comprising polyolefins. These lids give a split peel between the sealing polymer type and the tie layer polymer type. In order to generate the peel between these layers the sealing layer and the tie layer are formed from different polymer types to avoid too strong adhesion between the layers preventing the peel. The use of different polymer types in the lids means that such sheet lids cannot readily be recycled.

The current lid solutions offer acceptable characteristics in terms of processability, hygiene, mechanical properties, approval for food use and so forth. However, with an increasing focus on sustainability, there is a need for further solutions which provide acceptable properties whilst also accounting for environmental considerations.

The present invention has been made from a consideration of this.

**Summary of the Invention**

Thus, according to a first aspect of the present invention there is provided a heat-sealable lid film for being adapted into or applied as a heat-sealable lid for a container, the heat-sealable lid film having an outer surface and an inner surface, the inner surface being heat-sealable to an attachment surface of the container, the heat-sealable lid film comprising:

- a carrier film, the carrier film comprising an oriented polypropylene film;
- a multi-layer comprising propylene homopolymer, propylene copolymer or combinations thereof, the multi-layer being coextrusion coated to the carrier film, the multi-layer comprising one or more tie layers and a heat-sealing layer, the one or more tie layers being disposed between the carrier film and the heat-sealing layer and adhering the multi-layer to the carrier film, where there is more than one tie layer the tie layers face each other with no other layers between, the heat-sealing layer forming the inner surface of the heat-sealable lid film;

wherein the heat-sealable lid film comprises at least 90 wt % polymerised propylene based on the weight of the heat-sealable lid film.

The inventors have surprisingly found that a heat-sealable lid film comprising at least 90 wt % polymerised propylene can provide acceptable properties whilst additionally benefitting from the possibility to recycle the lid film as mono-polypropylene. During recycling, plastics are typically sorted in a water bath. It is desirable that the density of the heat-sealable lid film is less than 1 g/cm$^3$, as this reduces the risk of the film being sorted as a polyester, which has a density above 1 g/cm$^3$. Heat-sealable lid films with at least 90 wt % polymerised propylene have been found to be suitable for sorting in this process.

The polymerised propylene may have any suitable form. It may be propylene homopolymer, propylene copolymer or combinations thereof. Where copolymers are used, the amount of non-propylene components will be such that the amount of polymerised propylene is at least 90 wt % of the heat-sealable lid film.

In general, the references to propylene homopolymer may be a single propylene homopolymer or may be more then one propylene homopolymer. Likewise, the references to propylene copolymer may be one propylene copolymer or more than one propylene copolymer.

In some embodiments the heat-sealable lid film may comprise at least 95 wt % polymerised propylene based on the weight of the heat-sealable lid film. Alternatively, the heat-sealable lid film may comprise at least 92 wt % polymerised propylene, at least 94 wt % polymerised propylene, at least 96 wt % polymerised propylene, at least 98 wt % polymerised propylene, or may be formed entirely from polypropylene, in which case the heat-sealable lid film can be considered as essentially 100 wt % polypropylene.

The heat-sealable lid film may further comprise a peel layer located between the one or more tie layers and the sealing layer. Where there is more than one tie layer the tie layers face each other with no other layers in between, meaning the peel layer is disposed between the heat-sealing layer and the tie layer closest to/facing the heat-sealing layer. The peel layer may be configured to have an internal strength lower than that of each of the other layers and lower than the adhesion strength between layers. In this way, the peel layer can provide the breakpoint of the heat-sealable film. The heat-sealable lid film is for being adapted into or applied as a heat-sealable lid. When such a lid is sealed to a container, it will subsequently be peeled off by a user. When a user peels the lid, it will break somewhere within the film structure. Where the peel layer has an internal strength lower than the internal strength of each other layer present and lower than the adhesion strength between layers force applied by the user will cause an internal break within the peel layer, allowing the user to open the lid. The presence of a layer to provide the peel characteristics can be beneficial in some embodiments as it means the other layers can be optimised for other characteristics, without needing to also provide for the peel.

The peel layer may comprise a filler, such as talc. The filler may be present in an amount of from 5 - 25 wt %, preferably 10 - 20 wt% based on the weight of the peel layer. The function of the filler is to modify the properties of the polymer or polymers used to form the peel layer. Preferably the filler acts to reduce the strength of the peel layer i.e. reducing the force needed to be applied by a user when the heat-sealable lid film is adapted into or applied as a lid for a container in order for the peel layer to break, compared with circumstances in which no filler is present. Any suitable filler may be used, although typically the fillers will be inorganic fillers.

The peel layer may comprise polypropylene and filler or may consist essentially of polypropylene and filler. Whilst the polypropylene may be a single type of polypropylene, combinations or blends of polypropylenes may also be used. This may, for example, be a combination of a polypropylene with filler and a second polypropylene without filler. The combination can help to control the peel strength of the peel layer, by controlling the amount of filler present. It can also help to control the density of the peel layer, which contributes to the density of the overall film. The presence of the filler will typically affect the density of the peel layer, usually it will increase the density. The inclusion of one or more other polypropylenes e.g. one non-filled polypropylene can reduce the impact of this. As noted above, the density of the film can be relevant to the recycling process.

Alternatively, the peel layer may comprise or consist of propylene copolymer and filler.

The multi-layer of the heat-sealable lid film may consist of the one or more tie layers, preferably one tie layer, the peel layer, and the heat-sealing layer. Thus, in these embodiments there are no other layers present in the multi-layer aside from the tie layer or tie layers, the peel layer and the heat-sealing layer.

In all embodiments the carrier film comprises an oriented polypropylene film. Preferably it comprises a biaxially oriented polypropylene film. The carrier film may or may not comprise further layers. Where the carrier film does comprise further layers, these may be polyolefin layers such as polypropylene layers. The carrier film may comprise a layer which can be printed upon.

Preferably the carrier film has three layers, in which an oriented polypropylene film, preferably biaxially oriented, is disposed between a first polyolefin layer, preferably this first polyolefin layer comprises or consists of propylene homopolymer or propylene copolymer and further preferably it is corona treated, and a second polyolefin layer, preferably this second polyolefin layer comprises or consists of propylene homopolymer or propylene copolymer. In such embodiments the multi-layer would be adhered to the second polyolefin layer.

An overprint lacquer or overprint varnish may be applied to the carrier film. This can help to prevent the carrier film sticking to the apparatus used to seal the lid film to a container.

The heat-sealable lid film may or may not comprise other layers or films in addition to the carrier film and the multi-layer. Where the heat-sealable lid film does not comprise other layers, the heat-sealable lid film may be considered to consist of the carrier film and the multi-layer. In these embodiments the carrier film and the multi-layer may be as described herein. In these embodiments the carrier film would form the outer surface of the heat-sealable lid film.

In some embodiments the multi-layer has a total loading in the range of 5 - 20 g/m$^2$. The multi-layer may have a loading in the range 6 or 7 or 8 g/m$^2$ - 20 g/m$^2$. The multi-layer may have a loading in the range of 5 g/m$^2$ - 15 or 16 or 17 or 18 or 19 or 20 g/m$^2$. Preferably, the multi-layer has a loading in the range of 8 - 15 g/m$^2$. These loadings have been found to give good balance of adhesion and curl properties.

The loading of the multi-layer may be divided between the layers of the multi-layer in any suitable way. That is, between the tie layer or tie layers, the heat-sealing layer, the peel layer where present and any other layers present in the multi-layer. For example, the total tie layer loading i.e. combined loading of all of the tie layers may be 2 - 10 g/m$^2$. The heat-sealing layer loading may be 1 - 6 g/m$^2$. Where present the peel layer loading may be 1 - 6 g/m$^2$. The combined loading of all of the tie layers may be 3 - 8 g/m$^2$. The heat-sealing layer loading may be 1 - 4 g/m$^2$. Where present the peel layer loading may be 1 - 4 g/m$^2$. It has been found that these loadings of the peel layer and heat-sealing layer may be beneficial in some circumstances to avoid formation of hair-like filaments, known in the art as "angel hair".

In some embodiments, the tie layer, at least one of the tie layers, or all of the tie layers comprise or consist essentially of mono-polypropylene or mono-propylene copolymer. That is, in embodiments with only one tie layer, the tie layer may comprise or consist of a single polypropylene i.e. mono-polypropylene or a single propylene copolymer i.e. mono-propylene copolymer. Where there are two or more tie layers, this may apply to one tie layer, some of the tie layers, or all of the tie layers. It is surprising that a good adhesion can be obtained with such mono materials.

In some embodiments, the heat-sealing layer comprises or consists essentially of propylene copolymer. This may be a single propylene copolymer or may be a combination of two or more copolymers. Non-peelable very soft low temperature melting polymers have been found to give good heat-seal properties.

In some embodiments, each of the one or more tie layers and the heat-sealing layer comprises or consists essentially of propylene homopolymer, propylene copolymer or combinations thereof. The peel layer, where present, may comprise or consist of propylene homopolymer, propylene copolymer or combinations thereof and filler.

Every layer of the heat sealable lid film may comprise propylene homopolymer, propylene copolymer or combinations thereof.

In some embodiments, the magnitude of curl K of the film measured according to ISO 11556:2005(E), second edition 2005, is equal to or less than 10 m-1, and/or the chord-to-arc distance h of the film measured according to ISO 11556:2005(E), second edition 2005, is equal to or less than 20 mm. Such films can be considered as having low curl, which is beneficial for processability. The heat-sealable lid film may be punched to form a lid which can then be applied to a container. If the lid has significant curl it becomes difficult to process after punching before sealing to the container. Films with low curl will stay largely or essentially flat after punching making them much easier to seal to a container.

The heat-sealable lid film may be a heat-sealable lid. Thus, the discussion above in reference to the lid film can also be considered to apply to the lid.

The invention also relates in a second aspect to a lid obtained from a heat-sealable lid film according to the first aspect of the invention.

In a third aspect the invention relates to a package comprising a container and a lid, wherein:

the container comprises an attachment surface surrounding an opening of the container,
the lid is, or is a heat-sealable lid obtained from, a heat-sealable a lid film according to the first aspect of the invention, and

the lid is arranged with the heat-sealing layer facing the attachment surface of the container and the heat-sealing layer is sealed to the attachment surface of the container. It will be understood that the reference to the container in relation to the package as well as in relation to other aspects of the invention will be any suitable container. That is, it can have shape and dimensions the same as or similar to those conventionally used to package products like yogurt, mayonnaise, salads and crème cheese. Whilst the contains may comprise polymerised propylene such as polypropylene, they may additionally or alternatively be made of or include other materials.

In a fourth aspect the present invention relates to a method of manufacturing a heat-sealable lid film comprising at least 90 wt% polymerised propylene, based on the weight of the heat-sealable lid film, the method comprising the steps of:

- providing a carrier film, the carrier film comprising an oriented polypropylene film; and
- coextrusion coating a multi-layer onto the carrier film, the multi-layer comprising propylene homopolymer, propylene copolymer or combinations thereof, the multi-layer further comprising at least one tie layer and a heat-sealing layer, the multi-layer being coextrusion coated with the at least one tie layer disposed between the carrier film and the heat-sealing layer to adhere the multi-layer to the carrier film.

The method may be a method of manufacturing a heat-sealable lid film according to the first aspect of the invention. All embodiments discussed in connection with the first aspect of the invention apply also to the method of manufacture.

In a fifth aspect, the present invention relates to a method of manufacturing a heat-sealable lid, the method comprising the steps of:

i) manufacturing a heat-sealable lid film according to the method of the fourth aspect of the invention; and
ii) forming a heat-sealable lid for a container by punching a heat-sealable lid from the heat-sealable lid film.

Thus, the inventors have surprisingly been able to provide via these methods films and lids with a high proportion of polymerised propylene which can therefore be recycled as polypropylene, and which therefore have improved environmental credentials compared to conventional solutions whilst also satisfying the required processability and packaging requirements.

## Brief Description of Drawings

Embodiments of the invention will be described in the following detailed description with reference to the drawings in which:

**Figure 1** shows a schematic sectional view of a heat-sealable lid film according to the present invention,
**Figure 2** shows a schematic sectional view of an alternative embodiment of a heat-sealable lid film according to the present invention,
**Figure 3** shows a package according to the invention comprising a container and a lid formed from the heat-sealable lid film shown in Figure 2,
**Figure 4** is a schematic view of an extruder for coextrusion of a multi-layer having a tie layer and a sealing layer,
**Figure 5** is a flow diagram illustrating a coextrusion process carried out in the extruder of Figure 4, in which the different zones of the extruder are represented,
**Figure 6** is a view similar to that of Figure 4, showing an extruder for coextrusion of a multi-layer having a tie layer, a peel layer, and a sealing layer,
**Figure 7** is a flow diagram similar to that of Figure 5, illustrating a coextrusion process carried out in the extruder of Figure 6,
**Figure 8** shows a schematic side view of an apparatus for a coating process following the coextrusion process of Fig. 7 for coating the multi-layer onto a carrier layer, and
**Figure 9** shows a schematic side view of a test sample of a heat-sealable lid film for measuring curl.

It will be understood that the heat-sealing layer may also be referred to as a weldable layer. The carrier film may also be referred to as a base sheet.

It will be understood that a propylene homopolymer is a polymer that contains only propylene monomers. A propylene copolymer is a polymer that contains propylene monomers and one or more other monomer types. Thus, the copolymer could contain propylene monomers and one other monomer type, two other types of monomer or more than two other types of monomer. The copolymers can be of any suitable configurations such as random, alternating, block and so forth.

In this specification, generally, when terms such as "thickness" (measured in $\mu$m) and "distribution" or "loading" (measured in g/m$^2$) are used, unless otherwise indicated it is to be understood that the layer in question has a substantially or essentially uniform thickness across the planar extent of the layer or sheet or laminate or film according to the stated value.

It will be understood that "loading" may also be referred to as grammage, or area weight.

It will be understood that the terms "propylene" and "propene" refer to the same chemical structure. Thus, propene and propylene may be used interchangeably, as can the terms polypropene and polypropylene.

## Detailed Description of Embodiments

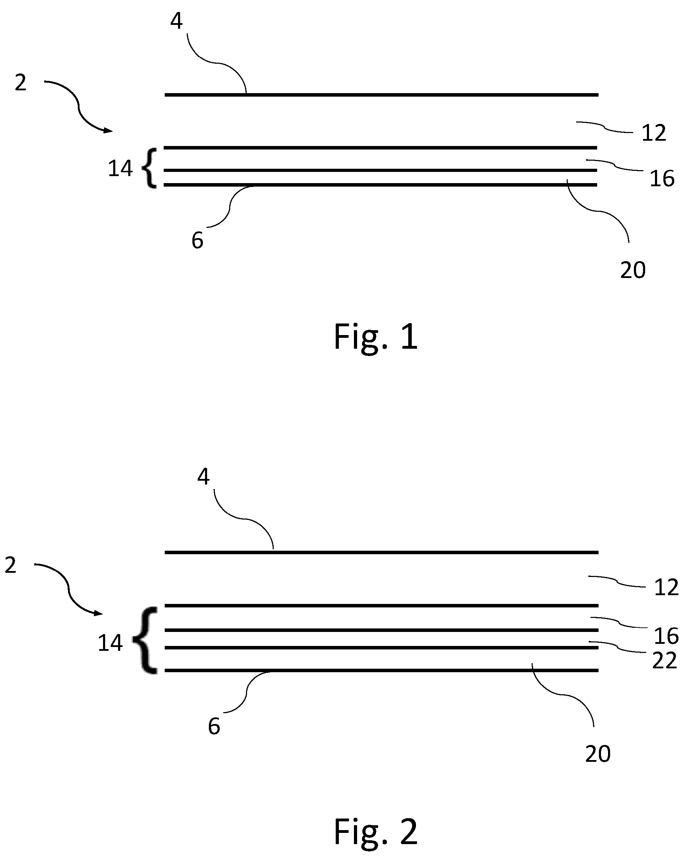

Referring to Fig. 1, a sectional view of a heat-sealable lid film 2 for being adapted into or applied as a of heat-sealable lid for a container 8 is shown. The heat-sealable lid film 2 has an outer surface 4 and an inner surface 6, the inner surface 6 being heat-sealable to an attachment surface 10 of the container 8. The heat-sealable lid film comprises a carrier film 12. The carrier film 12 comprises an oriented polypropylene film. For simplicity the carrier film is represented as a single layer. However, the carrier film may comprise additional layers, such as one or two additional layers. In the embodiment shown the carrier film forms the outer surface 4 of the heat-sealable lid film 2.

The heat-sealable lid film also comprises a multi-layer 14. The multi-layer 14 is coextrusion coated to the carrier film 12. The multi-layer 14 in this embodiment comprises one tie layer 16, and a heat-sealing layer 20. The tie layer 16 is disposed between the carrier film 12 and the heat-sealing layer 20 and adheres the multi-layer 14 to the carrier film 12. The heat-sealing layer 20 forms the inner surface 6 of the heat-sealable lid film 2.

As noted, the embodiment shown has a single tie layer 16 in the multi-layer 14. However, alternative embodiments may have 2, 3 or more tie layers. Where there is more than one tie layer, the tie layers are arranged in the multi-layer to face each other i.e. the tie layers are arranged together with no other layers between the tie layers. Thus, analogous embodiments with 1, 2 or 3 tie layers can be represented as follows:

carrier film/tie/heat-sealing layer
carrier film/tie/tie/heat-sealing layer
carrier film/tie/tie/tie/heat-sealing layer

Referring now to Fig. 2, a sectional view of an alternative embodiment of a heat-sealable lid film 2 for being adapted into or applied as a of heat-sealable lid for a container 8 is shown. The heat-sealable lid film 2 has an outer surface 4 and an inner surface 6, the inner surface 6 being heat-sealable to an attachment surface 10 of the container 8. The heat-sealable lid film comprises a carrier film 12. The carrier film 12 comprises an oriented polypropylene film. For simplicity the carrier film is represented as a single layer. However, the carrier film may comprise additional layers, such as one or two additional layers. In the embodiment shown the carrier film forms the outer surface 4 of the heat-sealable lid film 2.

The heat-sealable lid film also comprises a multi-layer 14. The multi-layer 14 is coextrusion coated to the carrier film 12. The multi-layer 14 comprises a tie layer 16, and a heat-sealing layer 20. The multi-layer 14 further comprises a peel layer 22 positioned between tie layer 16 and the heat-sealing layer 20. The tie layer 16 adheres the multi-layer 14 to the carrier film 12. The heat-sealing layer 20 forms the inner surface 6 of the heat-sealable lid film 2.

The embodiment shown has a single tie layer 16 in the multi-layer 14. However, alternative embodiments may have 2, 3 or more tie layers. Where there is more than one tie layer, the tie layers are arranged in the multi-layer to face each other i.e. the tie layers are arranged together with no other layers between the tie layers. Thus, embodiments with 1, 2 or 3 tie layers can be represented as follows:

carrier film/tie/peel/heat-sealing layer
carrier film/tie/tie/peel/heat-sealing layer
carrier film/tie/tie/tie/peel/heat-sealing layer

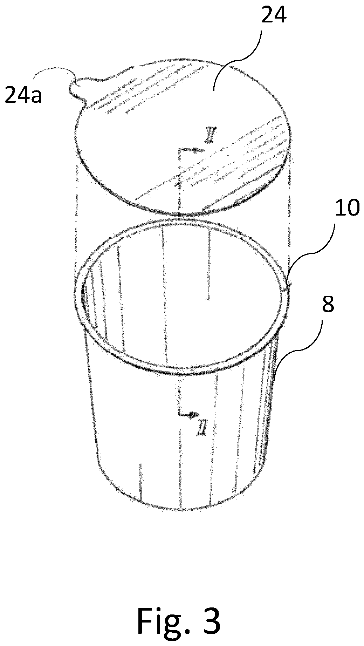

In this embodiment the peel layer provides the lid with the desired split function when the film is used to form a lid for a container. Such lids can be sealed, and which split when opened. This is discussed further with reference to Fig. 3 below.

In the embodiment shown in Fig. 2 the carrier film 12 is an oriented polypropylene film, namely Rayoface™ W58 supplied by Innovia Films. In the embodiment shown the carrier film has a thickness of 58 $\mu$m. The carrier film may comprise or consist of alternative oriented polypropylene films, preferably biaxially oriented polypropylene films. The films may be transparent, cavitated and/or metalized film. In general, suitable carrier films will have a stiffness level of 10 mN or above as measured according to SCAN-P 29:95. This is a standard according to the Scandinavian Pulp, Paper and Board Testing Committee. The 58 $\mu$m Rayoface W58 film of the embodiment was tested according to the SCAN-P 29:95 standard, using Lorentzen & Wettre apparatus, a bending angle of 30°, and a distance of 10 mm. The resistance is measured in a rectangular test piece where the long sides are parallel to the direction to be measured. 3.8 cm wide strips are cut along and across the fiber direction (the first is measured against a calibrated steel ruler). The length of the strips must be approx. 8 cm. The sample is placed in the device so that the bent (concave) side faces the counter sensor. After starting the apparatus the value can then be read from the screen.

The carrier film may be printed upon using any suitable print means. This can be beneficial to give the outer surface of the heat-sealable film the desired appearance. For example, Gecko® Frontal Uni silicone free products supplied by hubergroup may be used.

Overprint varnish or overprint lacquer may be applied to the carrier film. Examples include UV 459 Overprint Varnishes by Siegwerk and Gecko® 2K Varnish LSR; GL products may be used. These can improve processing by preventing the carrier film sticking to the sealing apparatus when the lid is to be sealed to a container.

In the embodiment shown in Fig. 2, the tie layer consists of Daploy™ WF420HMS from Borealis™. Where multiple tie layers are used, at least one of the layers may consist of this material. In the embodiment shown, the tie layer loading is 5 $g/m^2$.

In general, the tie layer may comprise at least 50 % by weight polypropylene or propylene copolymers, preferably at least 60, 70, 80, 90 or 95 % by weight or substantially 100 % by weight. The degrees of crystallinity may be above 60 %, 70 %, 80 % or 90 %. Where more than one tie layer is present this may apply to each tie layer.

In the embodiment shown in Fig. 2, there is a peel layer. The peel layer consists of 85 % Borealis™ WG350C which contains 18 wt% filler, namely talc, and 15 % of the same material as the tie layer i.e. Daploy™ WF420HMS from Borealis™. The shown peel layer has a loading of 4 $g/m^2$.

In the embodiment shown in Fig. 2 the heat-sealing layer consists of INEOS ELTEX® P KV353 at a loading of 2 $g/m^2$. This thin layer of non-peelable very soft low temperature melting polymer was found to give good heat-seal properties. In other embodiments the heat-sealing layer may further comprise a second material, such as a propylene copolymer. This could, for example, be ExxonMobil Vistamaxx™ 3980FL. The second material may be present in any suitable amount, for example up to 50% of the weigh of the peel layer e.g. in the range of 0 - 40 wt % or 0 - 30 wt %, including 10 wt % and 20 wt %.

Fig. 3 shows a representative use of the heat-sealable lid film of the present invention, such as that shown in Fig. 2.

A container or cup 8 is filled with foodstuff (not shown) in a filling machine, and a lid 24, pre-punched to its final shape from the heat-sealable lid film 2 of the invention, is applied to the container 8 subsequently and heat sealed to the attachment surface of the container 10, which is typically the rim portion, in order to seal the container 8. Any suitable apparatus and temperature may be used for the heat-sealing.

When the container 8 has been filled with the foodstuff and closed with the lid 24, a user may pull off the lid 24 by pulling at a periphery of the lid, for example at a peripheral lid flap 24a visible in Fig. 3.

The peel layer 22 shown in Fig. 2 is configured such that when the user pulls the lid as described above, the peel layer undergoes an internal split i.e. the peel layer itself breaks, enabling to lid to be opened by a user. This mechanism is in contrast to conventional lids which when pulled often result in separation or delamination between layers e.g. between a tie layer and a heat-sealing layer. In view of the significant amount of propylene polymer in the layers of the film of the present invention, the inventors found that the adherence between the layers would be high and thus a peel layer which can provide an internal split can be advantageous.

Optionally, an additional print or colour layer may be applied in a generally known manner on the outer surface 4 of the heat-sealable lid film, either before or after the punching of the lid 24, and/or an additional barrier coating may optionally be applied before or after the punching. Thus, the resulting lid 24 can be provided with desired aesthetic and/or barrier properties as required.

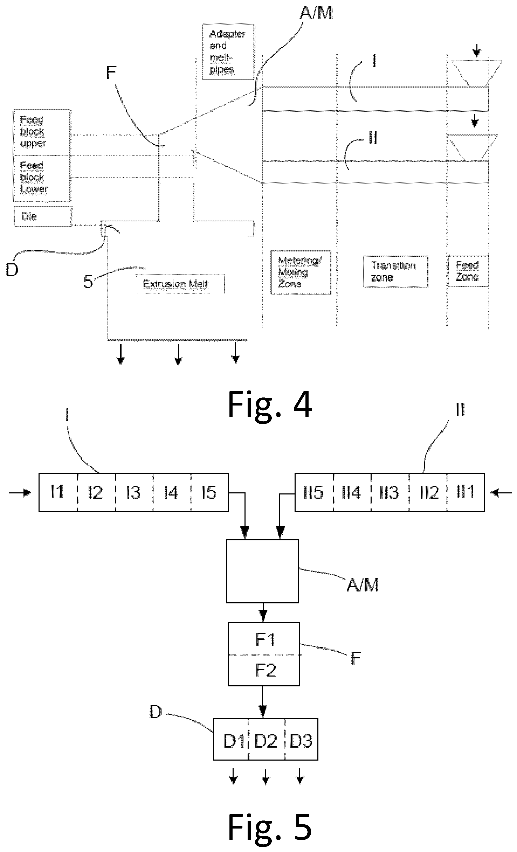

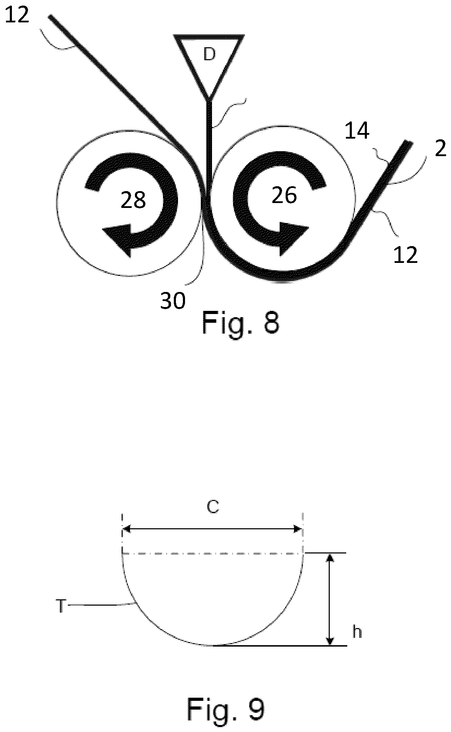

An extruder used in the coextrusion process of the coextrusion coating step of the method for making a heat-sealable film is shown in Fig. 4. The coextrusion process of the coextrusion coating step is schematically illustrated in the diagram of Fig. 5. The coating process of the coextrusion coating step is illustrated in Fig. 8, which schematically shows the coating process carried out on an apparatus for the coating step.

Referring to Fig. 4, the extruder or coextruder shown is a conventional apparatus for coextruding sheet laminates comprising thermoplastic polymer materials. It comprises two respective feeders I and II, where a tie layer granulate is fed into feeder I, and a heat-sealing layer granulate is fed into feeder II at the arrows in the figure. Each feeder I, II comprise a worm for transporting the respective material through the feeder I, II and into a feed block F via an adapter/melt pipe A/M.

Referring now also to Fig. 5, each feeder I, II comprise an initial feed zone I1, II1, respectively, followed by a transition zone I2; II2 (which may in other embodiments comprise two or more subzones), followed by a metering/mixing zone with subzones I3, II3; I4, II4; I5, II5, respectively. The metering/mixing zone is followed by an adapter/melt pipe A/M zone, which leads into the feed block F. In the respective feed zone I1, II1 the respective material fed into the respective feeder I, II is softened and heated almost to the melting point. In the transition zone I2, II2 the material is melted and pressure is built up. In the metering/mixing subzones I3, II3; I4, II4; I5, II5 a respective uniform melt of the respective material is created. In the A/M zone the two melts are transferred to meet in the feed block F. In a feed block upper zone F1 and a feed block lower zone F2, structure is built up in the two melts to be coextruded. The two melts are then coextruded from a die D to form a multi-layer. Generally, the nozzle width of the Die D may vary from 1000 mm to 2500 mm. The feeders I, II, the adapter/melt pipe A/M, the feed block F and/or the die D comprise a number of not shown conventional heaters that are temperature regulated by a not shown conventional regulator or controller. The regulator sets the heaters to heat the materials within the extruder to a given temperature in each of the zones. Temperature measurements in one or more of the temperature zones are provided to the regulator to allow the regulator to regulate the zone temperatures according to the set temperatures. The heaters take the form of one or more mantles or casings that surround or encase part or all of each of the apparatus parts I, II, A/M, F and D. Heat energy is also created due to friction inside the extruder, especially within the feeders I, II. When referring to a temperature within a zone in the following, reference is made to the set temperature of the heater in that zone.

As mentioned, the feed block F comprises an upper zone F1 and a lower zone F2, the upper zone F1 being positioned subsequent to the adapter and melt pipe A/M zone, and the lower zone F2 leading into the die D from which the coextruded melt is extruded. The die D comprises three interior zones D1, D2, D3 in a transverse direction, each interior zone having three subzones (not shown). The melts or extrudates of the materials merge and weld together into a laminar structure within and/or when exiting the die D to form the coextruded multi-layer that is applied onto the carrier film/base sheet layer before chilling as described below.

The feed zones I1, II1 extend from about 0 to about 1/5 of an entire transport length from beginning to end of the respective feeder I, II, the transition zone I2, II2 extends from about 1/5 to 2/5 of the length, the respective subzone I3, II3 of the metering/mixing zone from about 2/5 to 3/5 of the length, the second subzone I4, II4 from about 3/5 to 4/5 of the length, and the third subzone I5, II5 from about 4/5 to 5/5 of the length.

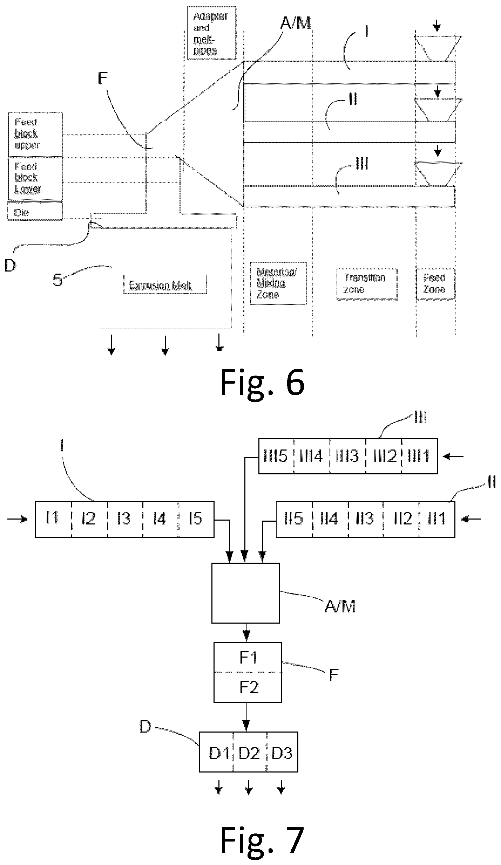

An analogous process for a three-layer coextrusion is shown in Fig. 6 and Fig. 7. Such a process could be used to form a multi-layer with a peel layer as shown in Fig. 2 or could be used to form an alternative embodiment to the embodiment shown in Fig. 1 with two tie layers.

Now referring also to Fig. 8, in the coating process of the coextrusion coating step the carrier film 12 is continuously rolled off from a feed roll to be moved between two rollers, specifically a cooling roller 26 and a counter roller 28 or pressure roller. The cooling roller 26 has a chilled or cooled outer surface onto which a melt of the material eventually forming the multi-layer is applied from the extruder die D of Figs 6 and 7 (which is seen from a lateral side in Fig. 8 as opposed to Fig. 6 where it is seen in a plane view) so as to be positioned between a carrier, which eventually forms the carrier film, and the cooling roller.

The coextrusion coating step shown in Figs 6 to 8 is thus a continuous process, the rollers rotating along the arrows in Fig. 8 to continuously pull the carrier film 12 off the not shown feed roll. Upon contact with the carrier film at or right before a nip 30 between the rollers, the melt adheres to the carrier film. Subsequently or at the same time, upon contact with the cooling roller, the melt is chilled to solidify.

The result is the film comprising the carrier film 12 coated with the multi-layer 14, which is then rolled up on a not shown collecting roller. The multi-layer comprises the two melts of the materials of the layers that are coextruded, i.e. extruded together through the single die D of the extruder. Thus, the two coextruded melts of the multi-layer melt are coextruded onto the carrier film so that the coextruded multi-layer adheres to the carrier film so as to form the heat-sealable lid film shown in Fig. 1. The process is analogous for products in which the multi-layer 14 comprises additional layers, such as tie layer 16, peel layer 22 and heat-sealing layer 20.

The resultant heat-sealable lid film is heat-sealable in its full planar extent. Thereby, any lid shape and dimension may be punched from a roll of the lid film, the resultant lid being adapted to the size and shape of the container and being heat-sealable thereto without the need for applying a welding lacquer. The heat-sealable lid film is supplied from the collecting roll and is punched into its final shape of the lid prior to being applied to a container.

Fig. 9 shows a side view of a circular test piece T with an area size of 100 cm$^2$ (corresponding to a diameter of 112.8 mm), The test piece T is cut or punched from the heat-sealable lid film to be tested. The test piece T is substantially undamaged and without conditioning. Sampling is done using ISO 186:2002. The test piece T is supported, e.g. using an apparatus according to Annex B of the said ISO standard, and the test piece T is allowed to curl until substantially reaching an end state in which it substantially no longer curls, typically no more than at the most 1 second or so is necessary. The curl is measured with the test piece T suspended such that the axis of the curl is vertical. The measurement is made at atmospheric humidity of 50 % and temperature of 20 °C. The exposure and measurement procedures according to the ISO standard's section 8.2 are carried out. Chord length C (measured in mm) and chord-to-arc distance h (measured in mm), see Fig. 9, are measured using, e.g., the tool of Annex C of ISO 11556:2005(E), second edition 2005. Chord length C in mm is measured across the centre of the test piece T. The chord-to-arc distance h is the maximum distance from the chord to the arc, in mm, measured upon a line perpendicular to the chord. The magnitude of curl K in m-1 is calculated according to section 9 of the ISO standard as:

$$K = \frac{8h}{C^2 + 4h^2} * 1000$$

Examples:

A heat-sealable lid film was produced according to the procedure discussed above and with composition as follows. The respective layers essentially consisted of the material outlined in the table below.

| Heat-sealable lid film #1 | | |
|---|---|---|
| Layer | Material | Layer thickness/distribution |
| Carrier film | Innovia Films Rayoface™ W58 | 58 μm |
| Tie layer | Borealis™ Daploy™ WF420HMS | 5 g/m$^2$ |
| Peel layer | 90 % Borealis™ WG350C + 10% Borealis™ WF420HMS | 4 g/m$^2$ |
| Heat-sealing layer | INEOS ELTEX® P KV353 | 2 g/m$^2$ |

The films were formed in accordance with the method represented by Fig. 6 and 7. With reference to these figures, the relevant temperatures of the zones is shown below (in °C):

| Zone | Feed zone (1) | Transition zone (2) | Metering /mixing zone (3) | Metering /mixing zone (4) | Metering /mixing zone (5) |
|---|---|---|---|---|---|
| Tie layer (I) | 200 | 240 | 270 | 290 | 290 |
| Peel layer (II) | 200 | 250 | 270 | 290 | 290 |
| Heat-sealing layer (III) | 40 | 160 / 220* | 260 | 280 | 280 |
| *For the heat-sealing layer two transition zones were used, one at a temperature of 160 °C and a second at a temperature of 220 °C. | | | | | |

The Heat-sealable lid film #1 was then tested to determine the following characteristics:

| Melt stable? | Yes |
|---|---|
| Initial attachment? | Ok |
| Welding strength (Copp; 1x170°C, 0.5s, 500N) Welding test against Ø95.5mm transparent PP cups on cup welders in PTC | 6.1 - 6.6 N/15mm |
| Peel (170C, 0.7, 3 bar): | Light peel, few threads, holds vacuum test (-0.2bar, 20s) and vacuum test (-0.3bar, 20s) |

A second film was also produced in the same manner as the first and with the same constituents, except that the peel layer contained 15% of the tie layer material by weight rather than 10% as for heat-sealable lid film #1, as shown below:

| Heat-sealable lid film #2 | | |
|---|---|---|
| Layer | Material | Layer thickness/distribution |
| Carrier film | Innovia Films Rayoface™ W58 | 58 μm |
| Tie layer | Borealis™ Daploy™ WF420HMS | 5 g/m$^2$ |
| Peel layer | 85 % Borealis™ WG350C + 15% Borealis™ WF420HMS | 4 g/m$^2$ |
| Heat-sealing layer | INEOS ELTEX® P KV353 | 2 g/m$^2$ |

This was also found to give similar properties.

A third film was produced in the same manner as the first and second and with similar constituents, except that the heat-sealing layer was modified by inclusion of a second material, namely ExxonMobil Vistamaxx™ 3980FL, as follows:

| Heat-sealable lid film #3 | | |
|---|---|---|
| Layer | Material | Layer thickness/distribution |
| Carrier film | Innovia Films Rayoface™ W58 | 58 μm |
| Tie layer | Borealis™ Daploy™ WF420HMS | 5 g/m$^2$ |
| Peel layer | 85 % Borealis™ WG350C + 15% Borealis™ WF420HMS | 4 g/m$^2$ |
| Heat-sealing layer | 70 % INEOS ELTEX® P KV353 + 30% Vistamaxx 3980FL | 2 g/m$^2$ |

The heat-sealable lid film #3 was also found to give acceptable properties, and the inclusion of the second material in the heat-sealing layer was found to improve the heat-seal characteristics, in particular to give a reduction in the Seal Initiation Temperature (SIT). It is believed that that the metallocene nature of the second material contributes to the lowering of the SIT.

**List of Reference Numerals**

2 heat-sealable lid film
4 outer surface of the heat-sealable lid film
6 inner surface of the heat-sealable lid film
8 container
10 attachment surface of the container
12 carrier film
14 multi-layer
16 tie layer

18 second tie layer
20 heat-sealing layer
22 peel layer
24 lid
24a lid flap
26 cooling roller
28 counter roller
30 nip

**Claims**

1. A heat-sealable lid film for being adapted into or applied as a heat-sealable lid for a container, the heat-sealable lid film having an outer surface and an inner surface, the inner surface being heat-sealable to an attachment surface of the container, the heat-sealable lid film comprising:

   - a carrier film, the carrier film comprising an oriented polypropylene film;
   - a multi-layer comprising propylene homopolymer, propylene copolymer or combinations thereof, the multi-layer being coextrusion coated to the carrier film, the multi-layer comprising one or more tie layers and a heat-sealing layer, the one or more tie layers being disposed between the carrier film and the heat-sealing layer and adhering the multi-layer to the carrier film, where there is more than one tie layer the tie layers face each other with no other layers between, the heat-sealing layer forming the inner surface of the heat-sealable lid film;

   wherein the heat-sealable lid film comprises at least 90 wt % polymerised propylene based on the weight of the heat-sealable lid film.

2. A heat-sealable lid film according to claim 1, wherein the heat-sealable lid film comprises at least 95 wt % polymerised propylene based on the weight of the heat-sealable lid film.

3. A heat-sealable lid film according to any preceding claim, wherein the multi-layer further comprises a peel layer, the peel layer being located between the one or more tie layers and the sealing layer, optionally the peel layer has an internal strength lower than that of each of the other layers and lower than the adhesion strength between layers.

4. A heat-sealable lid film according to claim 3, wherein the peel layer comprises a filler, such as talc, the filler optionally being present in an amount of from 5 to 25 wt %, preferably 10 - 20 wt% based on the weight of the peel layer.

5. A heat-sealable lid film according to any one of claims 3 to 4, wherein the peel layer comprises or consists essentially of polypropylene and the filler.

6. A heat-sealable lid film according to any one of claims 3 to 5, wherein the multi-layer consists of the one or more tie layers, preferably one tie layer, the peel layer, and the heat-sealing layer.

7. A heat-sealable lid film according to any preceding claim, wherein the multi-layer has a total loading in the range of 5 - 20 $g/m^2$, preferably 8 - 15 $g/m^2$.

8. A heat-sealable lid film according to any preceding claim, wherein the tie layer, at least one of the tie layers, or all of the tie layers comprise or consist essentially of mono-polypropylene or mono-propylene copolymer and/or wherein the heat-sealing layer comprises or consists essentially of propylene copolymer.

9. A heat-sealable lid film according to any preceding claim, wherein each of the one or more tie layers and the heat-sealing layer comprises or consists essentially of propylene homopolymer, propylene copolymer or combinations thereof or wherein every layer of the heat sealable lid film comprises propylene homopolymer, propylene copolymer or combinations thereof.

10. A heat-sealable lid film according to any preceding claim, wherein the magnitude of curl K of the film measured according to ISO 11556:2005(E), second edition 2005, is equal to or less than 10 $m^{-1}$, and/or the chord-to-arc distance h of the film measured according to ISO 11556:2005(E), second edition 2005, is equal to or less than 20 mm.

**11.** A heat-sealable lid film according to any preceding claim, wherein the heat-sealable lid film is a heat-sealable lid.

**12.** A heat-sealable lid obtained from a heat-sealable lid film according to any one of claims 1 to 11.

**13.** A package comprising a container and a lid, wherein:

the container comprises an attachment surface surrounding an opening of the container,
the lid is, or is a heat-sealable lid obtained from, a heat-sealable a lid film according to any one of claims 1 to 12, and
the lid is arranged with the heat-sealing layer facing the attachment surface of the container and the heat-sealing layer is sealed to the attachment surface of the container.

**14.** A method of manufacturing a heat-sealable lid film comprising at least 90 wt% polymerised propylene, based on the weight of the heat-sealable lid film, the method comprising the steps of:

- providing a carrier film, the carrier film comprising an oriented polypropylene film; and
- coextrusion coating a multi-layer onto the carrier film, the multi-layer comprising propylene homopolymer, propylene copolymer or combinations thereof, the multi-layer further comprising at least one tie layer and a heat-sealing layer, the multi-layer being coextrusion coated with the at least one tie layer disposed between the carrier film and the heat-sealing layer to adhere the multi-layer to the carrier film.

**15.** A method of manufacturing a heat-sealable lid, the method comprising the steps of:

iii) manufacturing a heat-sealable lid film according to the method of claim 14; and
iv) forming a heat-sealable lid for a container by punching a heat-sealable lid from the heat-sealable lid film.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

## EUROPEAN SEARCH REPORT

**Application Number**

EP 24 20 3554

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/153577 A1 (SU JAU-MING [US] ET AL) 20 June 2013 (2013-06-20) * claims 1,2 * ----- | 1-15 | INV. B32B27/08 B32B27/32 ADD. B32B7/06 B32B27/20 B65D77/20 |

**TECHNICAL FIELDS SEARCHED (IPC)**

B32B
B65D

The present search report has been drawn up for all claims

| Place of search | Date of completion of the search | Examiner |
|---|---|---|
| The Hague | 28 March 2025 | Hillebrand, Gerhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   ...................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 3554

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | Publication date | Patent family member(s) | | Publication date |
|---|---|---|---|---|
| US 2013153577 A1 | 20-06-2013 | US | 2013153577 A1 | 20-06-2013 |
| | | US | 2016318290 A1 | 03-11-2016 |
| | | US | 2019255824 A1 | 22-08-2019 |
| | | WO | 2013090159 A1 | 20-06-2013 |

EPO FORM P0459

For more details about this annex : see Official Journal of the European Patent Office, No. 12/82